Europäisches Patentamt

European Patent Office

Office européen des brevets

(11) Veröffentlichungsnummer: **0 472 768 A1**

## (12) EUROPÄISCHE PATENTANMELDUNG

(21) Anmeldenummer: **90116690.0**

(22) Anmeldetag: **30.08.90**

(51) Int. Cl.5: **G06K 19/077**

(43) Veröffentlichungstag der Anmeldung:
**04.03.92 Patentblatt 92/10**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Beer, Gottfried, Ing. (FH)**
**Waldstrasse 2**
**W-8411 Etterzhausen(DE)**
Erfinder: **Scheuenpflug, Richard, Ing. (FH)**
**Mariaorterstrasse 25**
**W-8411 Kleinprüfening(DE)**

(54) Verfahren zum Befestigen eines Chipmoduls auf einer Chipkarte.

(57) Bei einem Verfahren zum Befestigen eines Chipmoduls (2) auf einer aus Kunststoff bestehenden Chipkarte (1), bei dem der glasfaserverstärkte Kunststoffträger (3) des Chipmoduls (2) auf einer auf der Chipkarte vorgegebenen Stelle befestigt wird, soll die Haftfestigkeit des Chipmoduls (2) auf der Chipkarte (1) verbessert werden. Vor dem Befestigen des Chipmoduls (2) wird die Oberfläche des glasfaserverstärkten Kunststoffträgers (3) so bearbeitet, daß eine Oberfläche mit erhöhter Rauhtiefe gebildet wird.

Das erfindungsgemäße Verfahren findet insbesondere beim Einkleben von Chipmodulen in Chipkarten Anwendung.

EP 0 472 768 A1

Die Erfindung betrifft ein Verfahren zum Befestigen eines Chipmoduls auf einer aus Kunststoff bestehenden Chipkarte, bei dem der glasfaserverstärkte Kunststoffträger des Chipmoduls auf einer auf der Chipkarte vorgegebenen Stelle befestigt wird.

Chipkarten sind bekanntlich einen programmierbaren Halbleiterspeicherchip bzw. Chipmodul, beispielsweise ein EEPROM, enthaltende und damit programmierbare Kunststoffkarten. Solche Chipkarten werden beispielsweise als Wertkarten für den bargeldlosen Zahlungsverkehr verwendet. Sie können aber beispielsweise auch als Ausweisbzw. Identitätskarten zur Bedienung von Zugangskontrollsystemen benutzt werden.

Bei den verwendeten Chipmodulen sind die Halbleiterchips auf einem zweckmäßig aus einem glasfaserverstärkten Kunststoff bestehenden Trägerband beispielsweise durch Kleben befestigt und gebondet, d. h. die Kontaktflächen der Chips sind schon z. B. mittels Golddrähten mit den auf dem Trägerband befindlichen Leiterbahnen verbunden, die beispielsweise aus Kupfer bestehen. Der kontaktierte Halbleiterchip ist mit einer beispielsweise kalottenförmigen Schutzschicht bzw. Schutzabdeckung versehen. Diese Schutzabdeckung umschließt auch die am Halbleiterchip angebrachten Golddrähte. Die Halbleiterchips mit ihren Schutzabdeckungen werden dann aus dem Trägerband beispielsweise durch Ausstanzen vereinzelt, so daß einzelne, jeweils einen glasfaserverstärkten Kunststoffträger aufweisende Chipmodule gebildet werden.

Als Material für die Chipkarten wird beispielsweise ein thermoplastischer Kunststoff verwendet. Solche zweckmäßig genormte Chipkarten sind robust gegen mechanische Beanspruchung und störende umgebungsbedingte Einflüsse. Allerdings gibt es Haftprobleme mit den auf die Chipkarten an (der Norm entsprechend) vorgegebenen Stellen aufgeklebten Chipmodulen. Denn insbesondere bei Durchbiegungen der zweckmäßig elastischen Chipkarte kann sich die Klebeverbindung und damit der Chipmodul von der Karte lösen.

Der Erfindung liegt die Aufgabe zugrunde, bei einem Verfahren zum Befestigen eines Chipmoduls auf einer Chipkarte die Haftfestigkeit so zu verbessern, daß eine stabile und dauerhafte Verbindung von Chipmodul und Chipkarte erreicht wird.

Diese Aufgabe wird bei einem Verfahren der eingangs genannten Art erfindungsgemäß dadurch gelöst, daß vor dem Befestigen des Chipmoduls die Oberfläche des glasfaserverstärkten Kunststoffträgers so bearbeitet wird, daß eine Oberfläche mit erhöhter Rauhtiefe gebildet wird.

Das Bearbeiten der Oberfläche des glasfaserverstärkten Kunststoffträgers läßt sich in vorteilhafter Weise noch so intensivieren, daß die Struktur des Glasfasergewebes freigelegt werden kann.

Das Bearbeiten der Oberfläche des glasfaserstärkten Kunststoffträgers wird vorzugsweise durch Laserstrahlung vorgenommen. Der Kunststoffträger des Chipmoduls wird auf der Chipkarte zweckmäßig durch Kleben befestigt. Die Auswahl eines geeigneten Klebers ist dabei von dem für die Chipkarte verwendeten Kunststoff und von dem Material abhängig, das für den glasfaserverstärkten Kunststoffträger des Chipmoduls verwendet wird. Selbstverständlich wird für die Klebeverbindung bzw. Befestigung des Chipmoduls mit der Chipkarte ein Kleber, vorzugsweise auf Epoxidharzbasis, verwendet, der für die zu verbindenden Teile optimale Klebeeigenschaften besitzt.

Es kann aber auch vorteilhaft sein, sofern es das Material der Chipkarte als auch der verwendete Chipmodul zuläßt, den Chipmodul mit seinem Kunststoffträger auf der vorgegebenen Stelle der Chipkarte thermisch einzubringen bzw. zu befestigen. Diese Befestigungsvariante ist dem Kleben besonders dann vorzuziehen, wenn Chipmodulträgerteil und Chipkarte aus ähnlichem oder sogar gleichem Kunststoffmaterial bestehen. Unabhängig von der Befestigungsart, allerdings besonders vorteilhaft, ist es, wenn beim Lasern das Abtragen bzw. Aufrauhen der Oberfläche des glasfaserverstäkten Kunststoffträgers durch "Punkten" geschieht.

Die mit der Erfindung erzielten Vorteile bestehen insbesondere darin, daß durch das Abtragen der Kunststoffoberfläche des Chipmodulträgerteils eine Oberfläche mit erhöhter Rauhtiefe geschaffen bzw. bei stärkerem Abtrag die Struktur des Glasfasergewebes freigelegt wird. Damit wird zum einen erreicht, daß der relativ schlechte Adhäsionspartner, nämlich das Trägermaterial, beispielsweise Epoxidharz, oberflächlich teilweise entfernt wird. Zum anderen wird die Oberfläche des Kunststoffträgers aufgerauht bzw. die Gewebestruktur freigelegt und damit insbesondere bei der Verwendung eines Klebers zum Befestigen eine bessere Verankerung des Klebers erreicht. Von weiterem Vorteil ist, daß sogar ein Befestigen des Chipmoduls in der Chipkarte durch einfaches thermisches Einbringen ermöglicht wird.

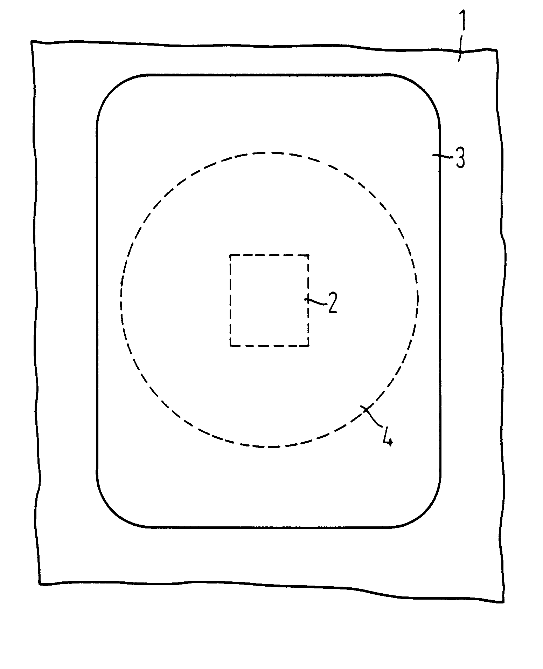

Anhand eines in der Figur der Zeichnung rein schematisch dargestellten Ausführungsbeispiels wird die Erfindung im folgenden näher erläutert.

In der Figur ist eine Draufsicht auf einen Ausschnitt des Teils der Chipkarte 1 dargestellt, an der die Stelle vorgesehen ist, an der der Chipmodul 2, beispielsweise ein programmierbarer Speichermodul (z.B. E$^2$PROM), befestigt wird. Die Chipkarte 1 besteht aus einem Kunststoff, beispielsweise einem Epoxidharz. Eine solche Chipkarte 1 ist zweckmäßig ein genormtes Teil und hat beispielsweise eine Dicke von 0,76mm. Auch die Befestigungsstelle für den Chipmodul 2 ist auf der Chipkarte 1 vorgegeben. Die Chipkarte 1 ist als Ausweis-, Identitäts- oder Wertkarte automatengerecht.

Der Chipmodul 2 umfaßt den dargestellten Halbleiterchip 2 mit seiner Abdeckung 4 und das Trägerteil 3, das aus einem glasfaserverstärkten Kunststoff besteht. Die aus einem Kunststoff bestehende Abdeckung 4 ist kalottenförmig ausgebildet und umschließt den Halbleiterchip 2 auf dem Kunststoffträger 3 kreisförmig. Der Bereich des Kunststoffträgers 3, der außerhalb der Abdeckung 4 liegt, bildet die zu bearbeitende Oberfläche des Kunststoffträgers 3. Vor dem Befestigen des Chipmoduls 2 an der vorgegebenen Stelle der Chipkarte 1 wird die Oberfläche des glasfaserverstärkten Kunststoffträgers 3 des Chipsmoduls 2 so bearbeitet, daß eine Oberfläche mit erhöhter Rauhtiefe gebildet oder bei noch stärkerem Abtrag die Struktur des Glasfasergewebes freigelegt wird. Das Abtragen bzw. Freilegen geschieht vorzugsweise mittels Laserstrahlen. Zweckmäßig wird ein leistungsfähiger Gaslaser, beispielsweise ein $CO_2$-Laser als Laserstrahlungsquelle verwendet. Das Bearbeiten des Kunststoffträgers 3 mittels Laserstrahlung kann beispielsweise durch Laserscannen oder unter Zwischenschaltung eines Beugungsgitters durchgeführt werden. Die Befestigung des Chipmoduls 2 auf der Chipkarte 1 wird entweder auf thermischen Wege oder unter Verwendung eines geeigneten Klebers vorgenommen.

**Patentansprüche**

1. Verfahren zum Befestigen eines Chipmoduls auf einer aus Kunststoff bestehenden Chipkarte, bei dem der glasfaserverstärkte Kunststoffträger des Chipmoduls auf einer auf der Chipkarte vorgegebenen Stelle befestigt wird,
   **dadurch gekennzeichnet,** daß vor dem Befestigen des Chipmoduls (2) die Oberfläche des glasfaserverstärkten Kunststoffträgers (3) 50 bearbeitet wird, daß eine Oberfläche mit erhöhter Rauhtiefe gebildet wird.

2. Verfahren nach Anspruch 1,
   **dadurch gekennzeichnet,** daß die Oberfläche des glasfaserverstärkten Kunststoffträgers (3) so weit abgetragen wird, daß die Struktur des Glasfasergewebes freigelegt wird.

3. Verfahren nach Anspruch 1 oder 2,
   **dadurch gekennzeichnet,** daß das Bearbeiten der Oberfläche des glasfaserverstärkten Kunststoffträgers (3) durch Laserstrahlung vorgenommen wird.

4. Verfahren nach einem der Ansprüche 1 bis 3,
   **dadurch gekennzeichnet,** daß der Kunststoffträger (3) des Chipmoduls (2) auf der Chipkarte (1) durch Kleben befestigt wird.

5. Verfahren nach einem der Ansprüche 1 bis 3,
   **dadurch gekennzeichnet,** daß der Kunststoffträger (3) des Chipmoduls (2) auf der Chipkarte (1) thermisch eingebracht wird.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 359 632 (THOMSON)<br>* Spalte 2, Zeile 46 - Spalte 4, Zeile 28 * * Spalte 5, Zeilen 43 - 47; Figur 1 *<br>– – – | 1,4,5 | G 06 K 19/077 |
| Y,A | EP-A-0 197 847 (FLONIC)<br>* Zusammenfassung; Figur 11 *<br>– – – – – | 5,1 | |
| | | | **RECHERCHIERTE SACHGEBIETE (Int. Cl.5)**<br><br>G 06 K |

**Der vorliegende Recherchenbericht wurde für alle Patentansprüche erstellt**

| Recherchenort | Abschlußdatum der Recherche | Prüfer |
|---|---|---|
| Den Haag | 02 Mai 91 | FORLEN G.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument